(19) Europäisches Patentamt
European Patent Office
Office européen des brevets

(11) **EP 2 244 098 B1**

(12) **EUROPEAN PATENT SPECIFICATION**

(45) Date of publication and mention
of the grant of the patent:
**26.10.2011 Bulletin 2011/43**

(51) Int Cl.:
***G01S 1/00*** *(2006.01)*     ***G01S 5/14*** *(2006.01)*
***G01S 13/87*** *(2006.01)*

(21) Application number: **09005539.3**

(22) Date of filing: **20.04.2009**

(54) **A master transceiver apparatus and a slave transceiver apparatus for determining a range information**

Master-Sende-Empfangsgerät und Slave-Sende-Empfangsgerät zur Bestimmung von Bereichsinformation

Appareil d'émetteur-récepteur maître et appareil d'émetteur-récepteur esclave pour déterminer des informations de plage

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**27.10.2010 Bulletin 2010/43**

(73) Proprietor: **Universität Duisburg-Essen**
**45141 Essen (DE)**

(72) Inventors:
 • **Jung, Peter**
 **47051 Duisburg (DE)**
 • **Viessmann, Alexander**
 **47137 Duisburg (DE)**
 • **Scheiber, Ernest**
 **47051 Duisburg (DE)**
 • **Kocks, Christian**
 **45481 Muelheim an der Ruhr (DE)**
 • **Bruck, Guido H.**
 **46562 Voerde (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 093 318**     **US-A1- 2002 118 723**
**US-A1- 2004 235 499**     **US-B1- 7 058 414**
**US-B2- 7 295 808**

**Description**

The present invention is in the field of localization and tracking as used in wireless communication systems.

Ultra-Wideband evolves as a radio technology for short-range high-bandwidth, communications. UWB (Ultra-Wideband) uses low energy levels and a large portion of the radio spectrum. For example, pulse code information with sharp carrier pulses at a bunch of center frequencies is used for transmission. Applications may comprise sensor data collection, position locating and tracking.

UWB communications transmit in a way that largely avoids interference with narrow band and continuous carrier systems in the same frequency band. Ultra-Wideband (UWB) is a technology for transmitting information spread over a large bandwidth (>500 MHz) that should, in theory and under the right circumstances, be able to share spectrum with other users. Ultra Wideband was traditionally accepted as pulse radio, but is now defined in terms of a transmission from an antenna for which the emitted signal bandwidth exceeds the lesser of 500 MHz or 20% of the center frequency. Thus, pulse-based systems may transmit pulses occupying the UWB bandwidth, or an aggregation of for example 500MHz worth of narrow band carriers, for example in an orthogonal frequency division multiplexing (OFDM) fashion. Pulse repetition rates may be either low or very high. Pulse-based radars and imaging systems tend to use low repetition rates, typically in the range of 1 to 100 mega-pulses per second. On the other hand, communications systems favor high repetition rates, typically in the range of 1 to 2 giga-pulses per second, thus enabling short-range gigabit-per-second communications systems. Each pulse in a pulse-based UWB system may occupy the entire UWB bandwidth, thus reaping the benefits of relative immunity to multipath fading (but not to intersymbol interference), unlike carrier-based systems that are subject to both deep fades and intersymbol interference.

The EUWB (Coexisting Short Range Radio by Advanced Ultra-Wideband Radio Technology, FP7-ICT-215669, www.euwb.eu) project has been an industry-led initiative of twenty-one major industrial and excellent academic organizations from Europe and Israel targeting innovative improvement, adaptation, integration and application of short-range Ultra-Wideband Radio Technology (UWB-RT). Started in April 2008, the EUWB project has leveraged and enhanced the scientific knowledge base in the advanced UWB-RT and has provided sophisticated new applications enabled by UWB and highly demanded in several European key industrial sectors such as home entertainment consumer electronics, automotive, public transportation, and heterogeneous cellular networks. Within EUWB, major fields of this emerging challenge have been identified, such as the cognitive radio related Detect-And-Avoid (DAA) technology and the localization and tracking (LT) technology.

It has been widely accepted that Ultra-Wideband radio technology (UWB-RT) enables short range wireless communications with data rates ranging up to Gigabit per second as well as precise real-time localization and tracking. Interestingly, this important emerging market has been mainly addressed by start-up companies in the past years and it has been witnessed a global consolidation, bringing M&A (merger and acquisition) of the sound enterprises. Companies like Staccato Communications, Wisair and Realtek have been working on the implementation of the above mentioned features which have been inherent to UWB-RT because of the unique ultrawide radio frequency band allocation which allows its operation in a virtually unlicensed radio frequency band. UWB-RT has been recognized to be an attractively scalable with regard to complexity, range, costs, throughput and location estimation precision.

Furthermore, while in operation UWB-RT generates merely minimum interference for other communication systems and therefore supports a well-balanced coexistence with other electronic equipment. In this respect, UWB-RT presently outperforms competing radio technologies, cf. S. Zeisberg, V. Schreiber: "EUWB - Coexisting short range radio by advanced ultra-wideband radiotechnology," ICT-MobileSummit 2008 Conference Proceedings, Paul Cunningham and Miriam Cunningham (Eds), IIMC International Information Management Corporation, 2008, ISBN: 978-1-905824-08-3.

The EUWB project has been a medium-term effort which targets the integration oriented research and technology development as well as regulation and standardization activities which are necessary for the harmonized application of the enhanced UWB-RT building blocks in addressed application environments. Challenging targets have been set in terms of data rate, coexistence level, technological advances, and interoperability. Particularly, cross-layer design functionality which facilitate cognitive radio (CR) based cooperation as well as localization and tracking schemes, the accommodation of smart antennas and MIMO (multiple input multiple output) concepts and the fertilization of multimedia data transport (e.g. Blue-Tooth v3.0, WiHD 1.0, IEEE 802.15.3c, etc.) have been focal issues.

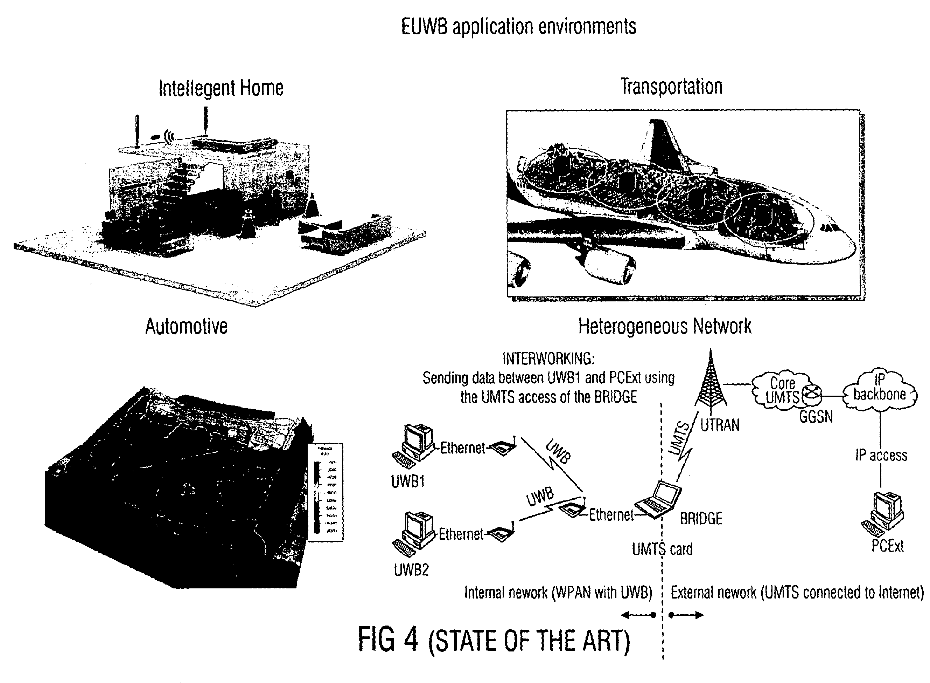

Fig. 4 provides an overview of a set of different application environments addressed by EUWB: Intelligent home, transportation, automotive and heterogeneous networks. The EUWB project has targeted these four prominent key target industrial sectors in which the UWB-RT applications will be implemented, namely home entertainment consumer electronics, automotive, public transportation, and heterogeneous cellular networks.

In the EUWB project, the UWB-RT deployment in the home entertainment consumer electronics sector is organized by the EUWB partner Philips. The automotive sector within EUWB is directed by Bosch. The EUWB partner EADS has been gearing of the public transportation sector and the heterogeneous cellular networks domain is structured by the EUWB partner Telefónica.

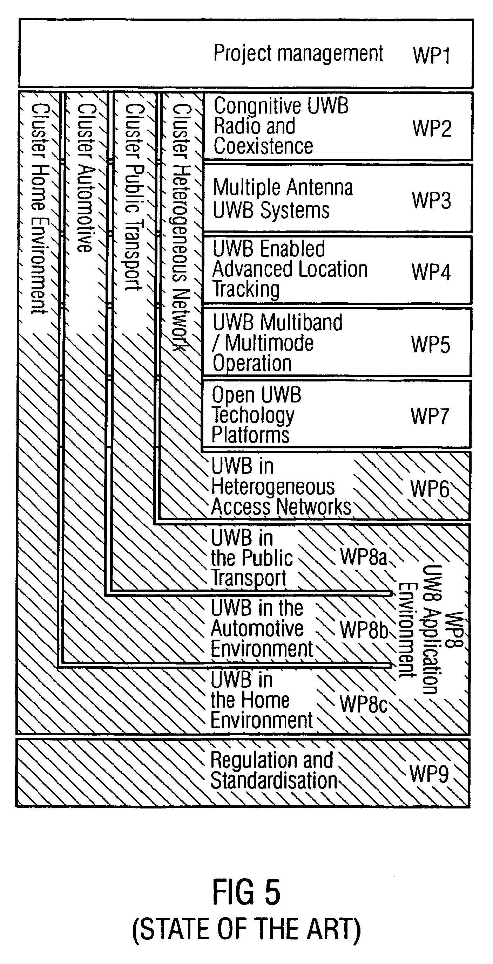

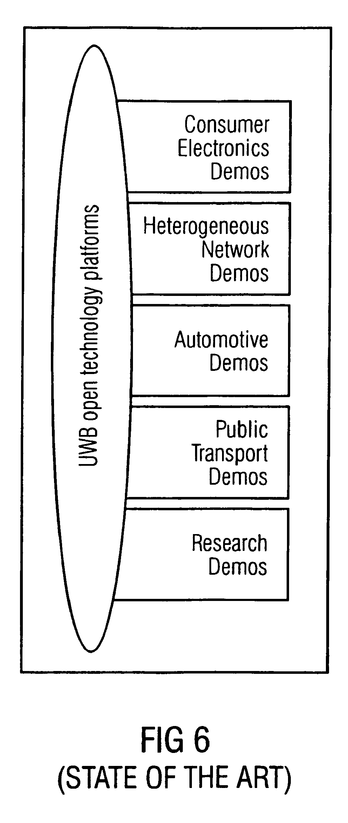

Fig. 5 illustrates nine different work packages into which the EUWB has been structured. In Fig. 5 the four EUWB application environments which have been addressed by Fig. 4 are also indicated. Fig. 6 illustrates the open technology platforms of WP5. Figs. 4, 5, and 6 have been taken from S. Zeisberg, V. Schreiber: "EUWB - Coexisting short range radio by advanced ultra-wideband radiotechnology," ICT-MobileSummit 2008 Conference Proceedings, Paul Cunningham and Miriam Cunningham (Eds), IIMC International Information Management Corporation, 2008, ISBN: 978-1-905824-08-3.

To achieve these goals, the EUWB project has been structured into nine work packages (WPs) shown in Fig. 5. WP1 is the project management activity, WP2 deals with CR aspects; MIMO concepts are developed and evaluated by WP3. The provision of UWB-RT is accomplished by WP5 and WP7, the latter dealing with UWB open technology platforms. According to Fig. 5 the applications clusters are also reflected in WP6 and WP8. These have been based on commercial or close to commercial chips sets for the ECMA 368/369 standard and on chip prototypes for the IEEE 802.15.4a standard. Both systems will be compliant with the standards and fulfill the European and world-wide regulatory requirements in their final version. In Fig. 6 the deployment activities of the UWB open technology platforms of the EUWB project is shown. The platforms have been designed universally open. Furthermore, the platforms have been designed to support the research demonstrations.

A major asset of UWB-RT and, consequently of the EUWB project, will be the implementation of the Detect-And-Avoid (DAA) technology. An elegant DAA solution, which was an outcome of the FP6 PULSERS Phase II project, http://www.pulsers.eu was already presented by A. Durantini, R. Giuliano, F Mazzenga, J. Hemandez, M. B. Villarroya, "Detect and avoid procedure for UWB interference mitigation on narrowband systems," Third International Symposium on Wireless Communication Systems (ISWCS '06), pp. 428-432, 6-8 September 2006. DAA procedures support the coexistence between UWB-RF devices and existing narrowband radio systems operating in the same area and at the same time. The authors showed that the interference can be reduced, however, at the expense of a reduced performance of the UWB devices.

A further important goal is the deployment of advanced localization and tracking (LT) schemes. LT solutions have become a major asset for UWB applications, "LT system - PHY, MAC and network layers," D3a-2.1 final version, June 2006, PULSERS Phase II (IST FP6-027142), public deliverable, applicable to virtually all industrial sectors, to those considered in the framework of EUWB. As shown in Fig. 5 the corresponding research and development activities are focused in WP4.

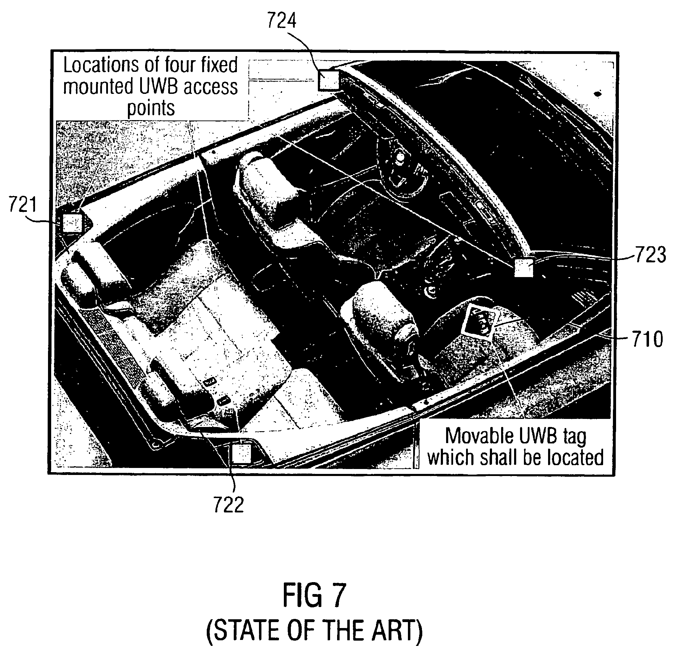

Fig. 7 illustrates a UWB setup for determining the location of a movable UWB tag, which is exemplified as a wireless car key 710. As Fig. 7 illustrates, there are four fixed mounted UWB access points (AP) 721, 722, 723, and 724 which are located at the four corners of the cabin shown in Fig. 7.

Owing to its vast bandwidth, UWB-RT enables a high resolution of space surrounding UWB transceivers. This feature makes UWB-RT particularly attractive for LBS services in a small scale environment, typically found in indoor or in-cabin scenarios. For instance, LT can be used to identify whether a particular seat in an airplane has been occupied. In an automotive environment, the localization of a wireless key, inside or outside a car and its distance from the car, could be estimated. Fig. 7 illustrates a possible scenario for the latter case. Four fixed mounted UWB access points (APs) are deployed to receive the UWB signals transmitted by a movable UWB tag. The received UWB signals form the basis for the location estimation and the tracking of the tag. The necessary signal processing will be done by a controller which could be included in one of the fixed mounted APs.

The applied LT scheme depends on the network architecture. Both, centralized and decentralized networks can be assumed, cf. "LT system - PHY, MAC and network layers," D3a-2.1 final version, June 2006, PULSERS Phase II (IST FP6-027142), public deliverable. In case of the home environment a decentralized approach seems more attractive whereas in public and private transport, a centralized approach is preferred.

One drawback of the above-mentioned localization schemes is their lack of accuracy. For example, in the above-described PULSERS Phase II concept, the achieved accuracy may be well above 0.5 meters, i.e. may not be feasible to determine whether a wireless key is in a car, especially if it is near the doors of the car. A major disadvantage of the conventional localization and tracking concepts is their lack of resolution. Especially when low-cost components are used, localization accuracy can not be assured.

EP 1 093 318 A2 describes a method for locating mobiles in a cellular network making use of base stations, which do not need to be synchronized. At least three base stations or cells are used to determine round trip delays to the mobile unit in order to enable triangulation. The mobile unit is handed-over or assigned to the at least three base stations involved and is synchronized to the respective base stations in order to determine the round trip delay.

US 7,295,808 B2 provides a method for calibrating a repeater in a wireless communication system. Multiple signals are received at multiple positions from the same originating transmitter. Calibration parameters are derived from the time of the measurements and the positions at which the measurements are taken.

US 7,058,414 B1 provides a communication protocol for UWB communications. A distance to a remote device is determined from a local device preferably using MAC-signaling. A communication with a remote device is established dependent on the distance determined. If the distance is too large, communication to the remote device is blocked.

US 2002/0118723 A1 provides a concept for localization of a mobile device using round trip measurements of a messaging scheme. The mobile radio device transmits ranging messages to a plurality of reference radios, which respond by transmitting reply ranging messages. Upon reception of said reply ranging messages, the mobile radio determines the range to the reference radios based on the signal propagation time and determines its position by a combination of the known positions of the reference radio stations.

Therefore it is the objective of the present invention, to provide an improved concept for a location tracking application enabling efficient implementation.

The object is achieved by a master transceiver apparatus according to claim 1, a method for determining a range information according to claim 9, a slave transceiver apparatus according to claim 10 and a method for synchronizing with a master transceiver according to claim 14.

It is a finding of the present invention that the major factor contributing to the lack of accuracy to the state of the art concepts is the processing delay that occurs at the transceiver apparatuses or access points involved, especially when low-cost implementations are utilized. In other words, when demanding a high localization precision, for example to get a 0.5m localization accuracy, a time accuracy within 2ns has to be achieved. Therefore, it is the finding of the present invention, that process delays should be considered as much as possible, when taking round-trip time measurements, i.e. when measuring propagation times or delays of the respective signals.

While conventional concepts make use of predetermined message sequences, where rather large scale communication delays can be measured, embodiments of the present invention achieve a significantly higher accuracy for time measurements by taking into account processing delays. For example, when measuring propagation times or delays of radio signals, traveling at the speed of light, processing delays in the transmitter are taken into account by embodiments, in order to achieve higher precision or accuracy as compared to conventional concepts. Since the time measurements that have to be taken can be very short, e.g. in the range of nanoseconds, delays occurring between the generation of a message and the actual transmission of a message can be taken into account in order to improve the overall results.

It is a further finding of the present invention that cross-layer functions and cognitive radio may be combined. This fact can be exploited in a design of application oriented features, for example UWB-RT. Embodiments achieve advantages with respect to localization as well as tracking of devices. Embodiments may further achieve the advantage of enabling low cost implementations of location tracking without the need to alter existing UWB-RT devices. Therefore, embodiments may be ready for application and will improve the acceptance of UWB-RT in many field of application.

Embodiments of the present invention will be detailed using the accompanying figures in which

Fig. 1a shows an embodiment of a master transceiver apparatus;

Fig. 1b shows an embodiment of a slave transceiver apparatus;

Fig. 1c shows a message sequence illustrating determination of a range information with embodiments;

Fig. 2 illustrates a simple location tracking scenario;

Fig. 3a shows a message sequence of embodiments;

Fig. 3b shows an improved messaged sequence of embodiments;

Fig. 4 shows state of the art application environments for EUWB;

Fig. 5 illustrates work packages of EUWB;

Fig. 6 shows four UWB open technology platforms; and

Fig. 7 shows a state of the art location and tracking scenario.

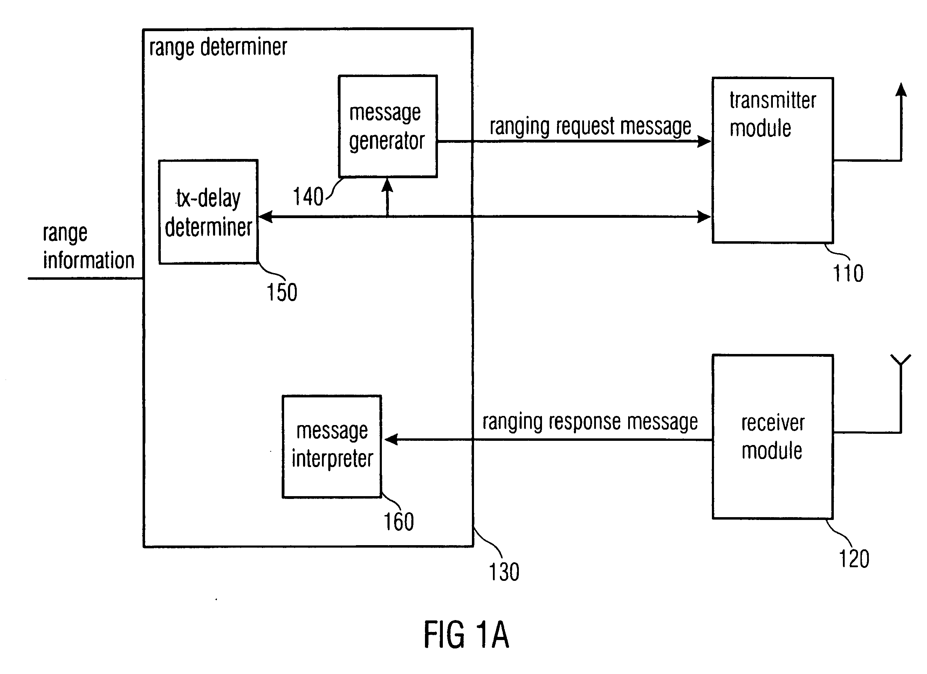

Fig. 1a shows a master transceiver apparatus 100 being adapted for determining a range information. The master transceiver apparatus 100 comprises a transmitter module 110, a receiver module 120 and a range determiner 130. The range determiner further comprises a message generator 140, a transmission delay determiner 150 and a message interpreter 160.

The transmit module 110 is adapted for transmitting messages, to receiver module 120 is adapted for receiving message. In the following embodiments will be described being adapted for communicating using different kinds of messages. These messages may correspond to layer 2, MAC (Medium Access Control), physical layer or higher layer messages. In order to facilitate the understanding of the inventive concepts, involved messages are labeled as e.g.

ranging request or ranging response messages in order to indicate their purpose. These terms are not meant to be limiting in any way to the actual format or content of the messages. All messages referred to in the following may correspond to a piece of information in general, it may comprise one or more bits or symbols, they may be signaled implicit or explicit. As one embodiment of a message a particular signal form or wave form may be used, the messages may be encoded, protected by redundancy, repeated etc. Moreover, messages may be transmitted or received by means of electromagnetic waves, infrared signal, ultra sonic signal etc. In some embodiments UWB may be used for message communication.

The range determiner 130 is adapted for determining the range information, the range determiner 130 is coupled to the transmitter module 110 and to the receiver module 120. The range determiner 130 comprises the message generator 140 for generating a ranging request message at a first time instant $t_0$ for transmitting. The range determiner 130 further comprises the transmit delay determiner 150 for determining a request transmit delay $\delta_{TX,requ}$ between the first time instant $t_0$ when the ranging request message is generated and a transmission time instant $t_0+\delta_{TX,requ}$ when the ranging request message is actually transmitted by the transmitter module 110.

In the following, time instants will be denoted by "$t$" or "$T$", delays will be denoted by $\delta$. When using two indices the first index indicates whether a respective terms refers to transmission "$TX$" or reception "$RX$". The second index may be used to indicate the type of message the term refers to, i.e. "requ" for a ranging request message, "resp" for a ranging response message, "sync" for a synchronization message, "TX-delay" for a transmission delay message, etc. For the more detailed embodiments described subsequently, the second index may serve as an indication whereat in a communication scenario the respective term occurs, i.e. "AP1" if it occurs at access point 1 and "AP2" if it occurs at access point 2.

The range determiner 130 further comprises a message interpreter 160 for interpreting a ranging response message associated with the ranging request message received at a received response time instant $t_{RX,resp}$ comprising an information on a time difference X indicating a delay of the ranging response message.

The range determiner 130 is further adapted for determining the range information based on the received response time instant $t_{RX,resp}$, the first time instant $t_0$, the request transmitter delay $\delta_{TX,requ}$ and the time difference $X$.

In embodiments the range determiner 130 can be adapted for determining the range information in terms of an information on a propagation time or an information on a propagation distance of the ranging request and/or the ranging response message. In other words, in embodiments signals may be exchanged through wireless communications. As the electromagnetic waves travel at a known velocity, i.e. the speed of light, information on a propagation time may be equivalent to information on a propagation distance. In other words, embodiments may use either one of propagation time or propagation distance or both, where for a known velocity both measures can be converted into each other.

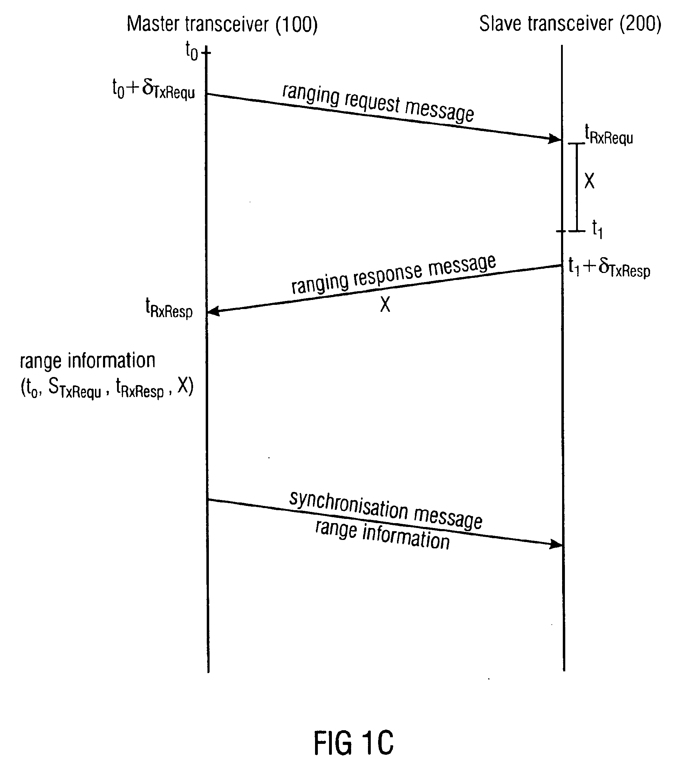

Fig. 1c illustrates a communication sequence, where on the left-hand side an embodiment of the master transceiver apparatus 100 is assumed. In Fig. 1c it is assumed that at the time instant $t_0$ a ranging request message is generated for transmission. However, between the generation of the ranging request message and its actual transmission by the respective transmitter module 110, there occurs a delay, namely $\delta_{TX,requ}$. This delay influences the accuracy of propagation time and distance measurement in the considered range, e.g. 0.5m precision, considerably. The ranging request message is then received at the slave transceiver apparatus 200 for which the details will be provided subsequently And which is depicted on the right hand side of Fig. 1c. Between the reception of the ranging request message at time instant $t_{RX,requ}$ and the time of generation of the ranging response message at a second time instant $t_1$ there is a time difference denoted by $X$.

Within the ranging response message information on the time difference $X$ is provided to the master transceiver 100. The master transceiver 100 receives the ranging response message at the time instant $t_{RX,resp}$ and may determine the range information based on the time instant $t_0$, at which it generated the ranging request message, the transmit delay $\delta_{TX,requ}$ which it took before actually transmitting the ranging request message, the received response time instant $t_{RX,resp}$, and the time difference $X$. In one embodiment, the range information may correspond to the round-trip time of the signal, which may be evaluated by the master transceiver, for example by the subtraction $t_{RX,resp}$-X-$t_0$-$\delta_{TX,requ}$. As mentioned above, taking into account the velocity, e.g. the speed of light when communicating using electromagnetic waves, the round trip time relates directly to the propagation distance.

In other embodiments the range determiner 130 may be adapted for further determining the range information based on a response transmit delay $\delta_{TX,resp}$ between a second time instant $t_1$ at which the ranging response message is generated and a response transmission time instant $t_1+\delta_{TX,resp}$ at which the ranging response message is actually transmitted, an information on the response transmit delay $\delta_{TX,resp}$ may be comprised in the ranging response message or in a separately received transmit delay message. In other words, in embodiments the message interpreter 140 may be adapted for interpreting the ranging response message in a way to extract a further information on a response transmit delay $\delta_{TX,resp}$ and/or for interpreting a separately received transmitted delay message in order to determine information on the response transmitter delay $\delta_{TX,resp}$.

As shown in Fig. 1c a processing delay may occur at the master transceiver 100 when transmitting the ranging request message, as well as on the slave transceiver 200 side when transmitting the ranging response message.

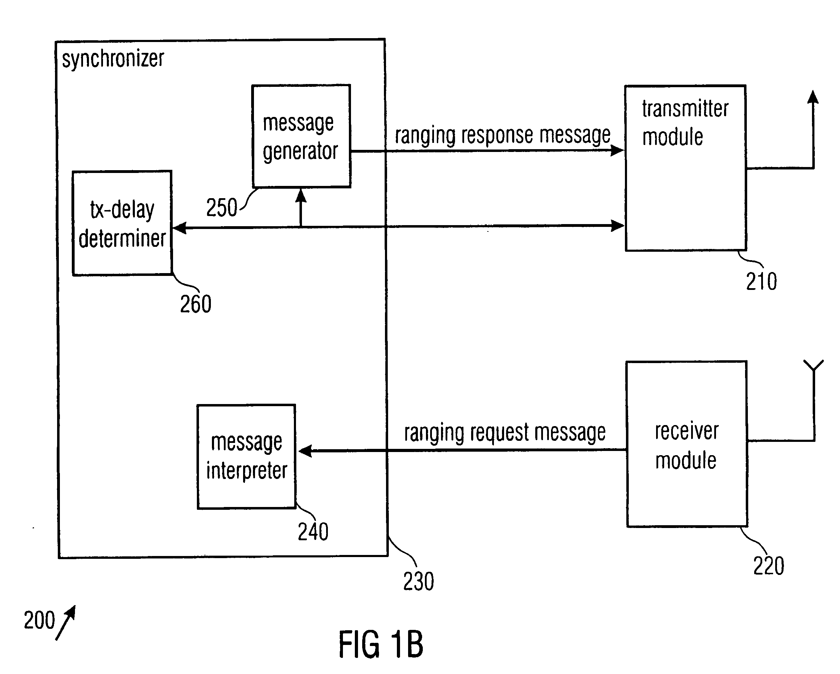

Fig. 1b illustrates an embodiment of a slave transceiver apparatus 200 being adapted for synchronizing with a master transceiver 100. The slave transceiver apparatus 200 comprises a transmitter module 210, a receiver module 220 and a synchronizer 230. The synchronizer 230 further comprises a message interpreter 240, a message generator 250 and a transmit delay determiner 260. The transmitter module 210 is adapted for transmitting messages, the receiver module 220 is adapted for receiving messages. The message interpreter 240 is adapted for interpreting a received ranging request message, the ranging request message being received at the request time instant $t_{RX,requ}$, as it is also illustrated in Fig. 1c. Furthermore, the message generator 250 is adapted for generating a ranging response message associated with the ranging request message a the response generation time instant $t_1$, the response generation time instant $t_1$ being delayed by a time difference $x$ relative to the request time instant $t_{RX,requ}$.

The message generator 250 is further adapted for generating the ranging response message such that it comprises an information on the time difference $X$. The synchronizer 230 further comprises a transmit delay determiner 260 for determining a response transmit delay $\delta_{TX,resp}$ between the response generation time instant $t_1$ and the response transmit time instant $t_1+\delta_{TX,resp}$ when the ranging response message is actually transmitted by the transmitter module 210. Furthermore, the message generator 250 is adapted for generating the ranging response message such that it comprises an information on the response transmit delay $\delta_{TX,resp}$ or for generating a transmit delay message comprising the information on the response transmit delay ($5_{TX,resp}$ for transmission.

The message interpreter 240 is further adapted for interpreting a synchronization message received subsequently to transmitting the ranging response message to obtain a range information as basis for synchronizing with the master transceiver 100.

In embodiments, the slave transceiver apparatus 200 may comprise a message generator 250 for generating an extra or separate transmit delay message comprising the information on the response transmit delay $\delta_{TX,resp}$ for transmission. Correspondingly, in embodiments of the transceiver apparatus 100 the information on the response transmit delay is then comprised in the received transmit delay message, the transmit delay message being generated at a third time instant $t_2$, transmitted at a transmit delay message time instant $t_2+\delta_{TX,Tx\text{-}delay}$ and received at a predetermined time $T_{slot}$ after reception of the ranging response message at $t_{RX,resp}$.

According to the above-described embodiment of the slave transceiver apparatus 200 the master transceiver apparatus 100 may in embodiments comprise a message generator 140 which is adapted for generating a synchronization message at a fourth time instant $t_3$ for transmitting, the synchronization message comprising an information on the range information and an information on when the synchronization message is transmitted. This is also illustrated in Fig. 1c, where the master transceiver apparatus 100 after having determined the range information provides a synchronization message to the slave transceiver apparatus 200 comprising an information on the range information.

In other words, the master transceiver apparatus 100 may determine a range information in terms of, for example, a propagation distance or a propagation delay of the signals exchanged between the master transceiver apparatus 100 and the slave transceiver apparatus 200. Therefore, the master transceiver apparatus 100 generates a ranging request message and the slave transceiver apparatus 200 replies to that message with a ranging response message. Since the ranging response message includes an information on the time difference $X$, i.e. the time between reception of the ranging request message and the generation of the ranging response message, the master transceiver can in turn conclude on the propagation time, knowing the propagation velocity also on the propagation distance.

In order to achieve higher accuracy, the slave transceiver apparatus 200 may provide an additional information on the processing delay, i.e. the time between when the ranging response message was generated $t_1$ and the time when it was actually transmitted $t_1+\delta_{TX,resp}$. This mechanism enables the master transceiver to determine the range information with a high accuracy. Once the master transceiver apparatus 100 has determined the range information, it may provide the range information for synchronization purposes to the slave transceiver. This is carried out in the synchronization message.

In embodiments the synchronization message may comprise an information on when the synchronization message is transmitted. This time instant may correspond to a fourth time instant $t_3$. Optionally, the synchronization message may comprise an information on a synchronization transmit delay $\delta_{TX,sync}$ between the fourth time instant $t_3$ and a transmission synchronization time instant $t_3+\delta_{TX,sync}$, when the synchronization message is actually transmitted. Therewith, the slave transceiver apparatus may achieve synchronization with enhanced accuracy, as again the respective processing delay on the master transceiver side can be taken into account.

In embodiments of the slave transceiver apparatus 200 the message interpreter 240 may be adapted for interpreting a synchronization message further comprising information on a request generation or first time instant $t_0$ when the ranging request message was generated and on a request transmit delay $\delta_{TX,requ}$ between the request generation time instant $t_0$ and a request transmit time instant $t_0+\delta_{TX,requ}$, when the ranging request message was actually transmitted. In embodiments the synchronizer 230 can be adapted for synchronizing with the master transceiver by considering the request generation time instant $t_0$, the request transmit delay $\delta_{TX,requ}$, the range information and the receive request time instant $t_{RX,requ}$.

In other embodiments, the message interpreter 240 may be adapted for interpreting a synchronization message further comprising an information on a synchronization message generation or fourth time instant $t_3$ when the synchronization message was generated and/or on a synchronization transmit delay $\delta_{TX,sync}$, between the synchronization generation time instant $t_3$ and the synchronization transmit time instant $t_3 + \delta_{Tx,sync}$, when the synchronization message was actually transmitted. The synchronizer 230 can be adapted for synchronizing with the master transceiver by considering the synchronization message generation time instant $t_3$, the synchronization transmit delay $\delta_{TX,sync}$, the range information and the received synchronization time instant $t_{RX,sync}$, when the synchronization message was received.

In embodiments the master transceiver apparatus 100 can be adapted for tracking a location of a slave transceiver apparatus 200. Therefore, after synchronization has been achieved according to the above-described embodiments, the master transceiver apparatus may transmit time instant messages for location tracking purposes. In other words, after synchronization has been achieved the master transceiver apparatus 100 may provide a time-stamped message to a slave transceiver apparatus 200 and the slave transceiver apparatus 200 may determine the propagation time or propagation distance of the time instant message, by comparing the transmit time, which is included in the message, to the reception time of the time instant message.

In other words, in embodiments the master transceiver apparatus 100 may comprise a message generator 140 being adapted for generating a time instant message, the time instant message comprising an information on a generation time instant $T_0$ at which the time instant message is generated. Furthermore, in embodiments, the time instant message may optionally comprise an information on the time instant transmit delay $\delta_{TX,time}$ between the generation time instant $T_0$ at which the time instant message is generated and the time instant transmit $T_0 + \delta_{TX,time}$ at which the time instant message is actually transmitted.

A corresponding embodiment of the slave transceiver apparatus 200 would then comprise a message interpreter 240 being adapted for interpreting a time instant message to obtain an information on a time instant $T_0$ at which the time instant message was generated and/or an information on the time instant transmit delay $\delta_{TX,time}$ between the generation time instant $T_0$, at which the time instant message was generated and the time instant message transmit time $T_0 + \delta_{TX,time}$ at which the time instant message actually was transmitted.

In embodiments the slave transceiver apparatus 200 may further comprise a processor for processing the information on the time instant $T_0$, a received time instant $T_1$ when the actual time instant message was received, and/or the time instant transmit delay $\delta_{TX,time}$ to obtain a propagation time or a propagation distance of the time instant message. Furthermore, the message generator 250 can be adapted for generating a propagation information message comprising an information on the propagation time or the propagation distance for transmission.

In turn, in embodiments of the master transceiver apparatus 100 the message interpreter 150 can be adapted for interpreting a received propagation information message comprising an information of a propagation time or a propagation distance between the transmitter of the propagation information message and the master transceiver apparatus 100 and/or an information on another propagation time or propagation distance between the transmitter of the propagation information message and another transceiver.

In other words, following the above-described concept, the slave transceiver apparatus 200 may provide a propagation information message to the master transceiver apparatus 100. From the propagation information message the master transceiver apparatus may conclude on the propagation time or the propagation distance of the time instant message it transmitted out earlier. Furthermore, embodiments of the slave transceiver apparatus 200 may receive time instant messages from other slave transceiver apparatuses. Correspondingly, they may in turn generate propagation information messages comprising information on a propagation time or propagation distance to said other slave transceiver apparatuses. The master transceiver apparatus 100 may receive multiple propagation information message, providing information on multiple propagation times and distances. In embodiments, the master transceiver apparatus 100 may be adapted to conclude on the position of a certain slave transceiver apparatus 200 from one or multiple propagation information messages.

In further embodiments the master or slave transceiver apparatus may be comprised in a mobile device, such as, for example a wireless key, a mobile phone, etc.

Embodiments may further comprise a system comprising an embodiment of the master transceiver apparatus 100 and comprising at least one embodiment of a slave transceiver apparatus 200.

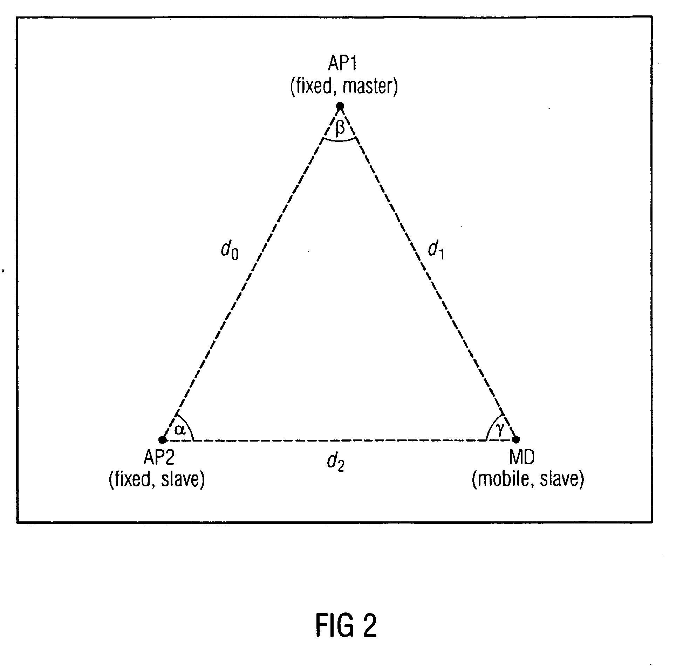

In the following a more detailed embodiment of a location tracking scenario will be described, assuming a scenario as exemplified in Fig. 2. Fig. 2 shows a setup of three communication nodes, in which access point 1 (AP1) corresponds to an embodiment of the above-described master transceiver apparatus 100. Moreover, Fig. 2 shows an embodiment of the above-described slave transceiver apparatus 200, labeled as AP2, i.e. access point 2. Between AP1 and AP2 there is a distance $d_0$. Furthermore Fig. 2 shows another embodiment of a slave transceiver apparatus 200, which is comprised in a mobile device (MD). The mobile device is located at a distance $d_1$ from a AP1 and at a distance $d_2$ from a AP2. According to Fig. 2, AP1, AP2 and MD spawn a triangle, in which the three distances $d_0$, $d_1$, and $d_2$ correspond to the side lengths and $\alpha$, $\beta$, $\gamma$ correspond to the respective angles.

It shall be noted that in this example a scenario with one master transceiver apparatus and two slave transceiver apparatuses is considered, where generally embodiments may comprise a multiplicity of slave transceiver apparatuses.

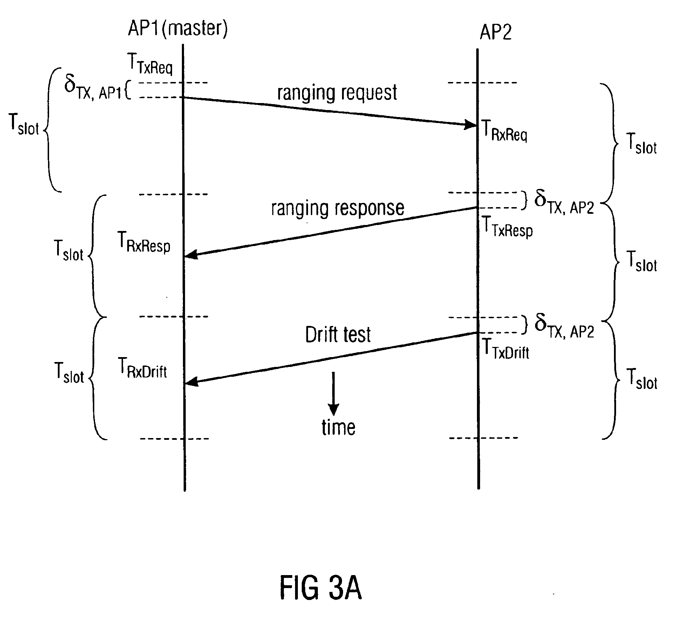

Fig. 3a illustrates a message sequence, which may be carried out between AP1 and AP2 in an embodiment. Fig. 3a shall illustrate the principal concept. AP1 corresponds to an embodiment of the master transceiver apparatus 100 AP2 corresponds to an embodiment of the slave transceiver apparatus 200. In Fig. 3a AP1 is shown on the left-hand side, AP2 is shown on the right-hand side. In the following embodiment it will be assumed that communication takes place on the basis of radio frames, which are subdivided in time slots, which have a duration of $T_{slot}$ and of which two are exemplified in Fig. 3a.

As shown in Fig. 3a AP1 initiates the sequence by transmitting a ranging request message to AP2. $T_{TX,requ}$ is the time stamp of request ranging frame on the initiator side, i.e. on the side of AP1. The ranging request message is received by AP2, where $T_{RX,requ}$ is the timestamp of the request ranging frame on the destination side, i.e. on the side of AP2. After having received the ranging request message, AP2 reacts with an associated ranging response message, of which $T_{TX,resP}$ is the time stamp of the response ranging frame on the destination side and correspondingly $T_{RX,resp}$ is the time stamp of the response ranging frame on the initiator side.

In embodiments, in order to compensate for synchronization losses due to clock drifts, embodiments of the slave transceiver apparatus 200 may be adapted for generating drift test messages. In other words, the message generator 250 may be adapted for generating a drift test message.

This is depicted in the embodiment shown in Fig. 3a, where AP2 generates such a drift test message where $T_{TX,frift}$ is the time stamp of the drift ranging frame on the destination side and $T_{RX,drift}$ is the time stamp of the drift ranging frame on the initiator side AP1. With c being the velocity of light, a distance d between AP1 and AP2 can be determined or estimated on the master transceiver side, i.e. by AP1, e.g. by

$$(\frac{d}{c})_{est} = \frac{1}{2}[(T_{RX,resp} - T_{TX,requ}) - (T_{TX,resp} - T_{RX,requ})] - \frac{1}{2}[(T_{RX,drift} - T_{RX,resp}) - T_{slot}]$$

The first term of the equation is the time estimation of the theoretical propagation time of the ranging request and the ranging response messages. The second term of the equation corrects the relative clock drifts, which may occur in practical implementations. In the above-considered embodiment, the time between transmission of the ranging response message by AP2 and the drift test message by AP2 is assumed to be $T_{slot}$. In other words, the ranging response message and the drift test message are transmitted in adjacent slots at the beginning of each particular slot. As a consequence, the delay between those frames is predetermined and equal to $T_{slot}$ and therewith known by the originator, i.e. by the master transceiver apparatus AP1.

As already described above, in embodiments drift test messages or drift test packets may be used, which may enable reduction or even elimination of the clock drifts between AP1 and AP2. As shown in Fig. 3a, transmission delays $\delta_{TX}$ occur, whenever a message is transmitted. In the following a notation will be used, in which the indexing will indicate at which transceiver the respective transmission delay occurs, i.e. $\delta_{TX,AP1}$ if it occurs at the master transceiver apparatus AP1, $\delta_{TX,AP2}$ if it occurs at the slave transceiver apparatus AP2. Embodiments may achieve higher accuracy in determining the propagation time or propagation distance by taking into account said transmission delays.

In the following based on the above-described embodiment an embodiment will be described, which enables location tracking application for UWB open technology platforms and which can be implemented efficiently, i.e. at low cost. As already mentioned above, cross-layer functionality may be exploited to accomplish location tracking. Embodiments may enable a communication protocol comprising basically three steps, which will be illustrated in the following. First, synchronization of the involved network nodes, i.e. the fixed mounted infrastructure, is carried out. Second, the localization of a mobile device can be carried out and finally, the triangulation and mapping for the mobile device can be established.

As already mentioned with respect to Fig. 2, a scenario having two fixed mounted access points AP1 and AP2 and a mobile device MD will be assumed. AP1 corresponds to an embodiment of the master transceiver apparatus 100 and AP2 corresponds to an embodiment of the slave transceiver apparatus 200, where potentially further access points may corresponds to further embodiments of the slave transceiver apparatuses. In the following embodiment, according to Fig. 2, all distances and angles shall be determined.

At first, synchronization is carried out. Synchronized cellular networks provide many benefits, as for example an increased spectral efficiency, a dynamic traffic balancing, an easy hand-over procedure and simple localization of mobile devices, where protocol efforts can be kept lower than in a non-synchronized cellular environment. The first solution to synchronization of adjacent cells in mobile radio was introduced in the C450 network deployed, for example, in Germany, c.f. K. Kammerlander: Factors influencing the design of economical cellular radio networks. Siemens Telecom Report, vol. 9 (1986), pp. 9-16. The concept, however, was not followed in the second generation system GSM (Global System for Mobile Communications), c.f. M. Mouly, M. B. Pautet: The GSM-system for mobile communications, 1992, but reintroduced as an option in UMTS (Universal Mobile Telecommunications System). Embodiments provide the advantage that they enable synchronization in small scale networks which occur in environments exploring, for example, UWB-RT.

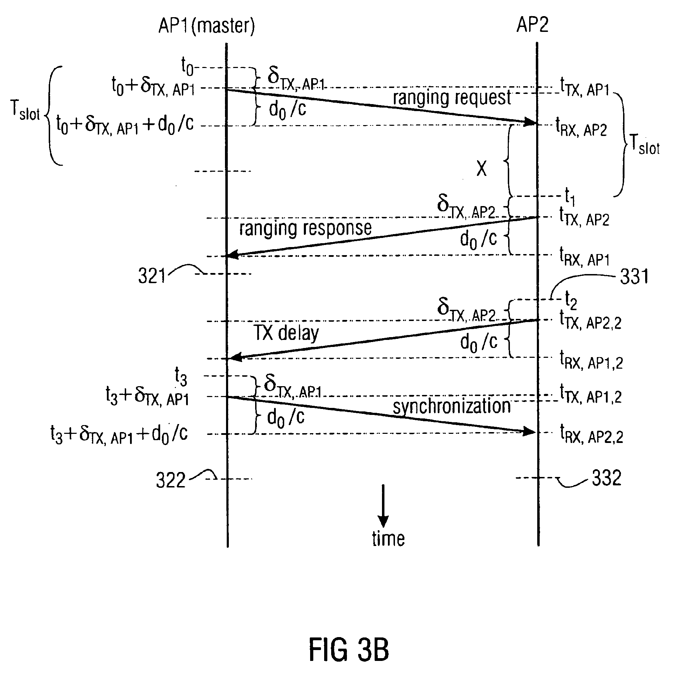

The embodiment described in the following concentrates on layer 2, i.e. the medium access control layer (MAC). As it was already described with respect to Fig. 3a it is assumed that the MAC is timeslot based, i.e. using a TDMA scheme (time division multiple access). Each slot is considered to have the same duration $T_{slot}$. It is further assumed that all access points have the same $T_{slot}$, however, at first start and consequently end times of the timeslots are not aligned, i.e. the access points are not synchronized. This scenario is depicted in Fig. 3b. Fig. 3b shows another message sequence, where on the left-hand side AP1 is depicted and on the right-hand side AP2 is depicted. The synchronization procedure is initiated by AP1. In order to synchronize the fixed mounted infrastructure, AP1 transmits a ranging request to all further access points, in the present embodiment to AP2.

For example, the ranging request messages contains the particular time instant $t_0$, at which it was initiated in the location tracking application, i.e. the first time instant at which the ranging request message was generated by the message generator 140. In embodiments the ranging request message may contain one of or a combination of the a sequence number, a source address, a destination address as well as the first time instant $t_0$, etc. In the present embodiment it is further assumed that $t_0$ is at the beginning of a timeslot as it is also shown in Fig. 3b. The transmitter module 110, i.e. the transmitter of AP1, will require a given processing time prior to the ranging request message being transmitted. This signal processing delay, will be denoted by $\delta_{TX,AP1}$ in the following, and corresponds to the request transmission delay $\delta_{TX,requ}$ which is determined by the transmit delay determiner 150. The actual time of transmission is hence

$$t_{TX,AP1} = t_0 + \delta_{TX,AP1} \ . \qquad (1)$$

The ranging request message requires a certain travel time $d_0/c$ to arrive at the antenna of AP2. This is also indicated in Fig. 3b.

Therefore, the time of reception at AP2 is given by

$$t_{RX,AP2} = t_0 + \delta_{TX,AP1} + \frac{d_0}{c} \ , \qquad (2)$$

where $t_{RX,AP2}$ corresponds to the time at which the ranging request message is being received at the slave transceiver apparatus, also denoted as $t_{RX,requ}$, c.f. Fig. 1c. At AP2, the message interpreter 240 may then interpret the received ranging request message, an embodiment may extract one of or a combination of the group of a sequence, a source address, a destination address, etc.. Moreover, it may also extract the message content, i.e. $t_0$.

In turn AP2 generates a ranging response message at a ranging response generation time instant $t_1$, which may correspond to the beginning of a timeslot following the reception of the ranging request message. In an embodiment, the ranging response message may again comprise the one of or a combination of the group of a sequence number, a source address, a destination address, etc. Moreover, the ranging response message may comprise an information on the time difference $X$, which elapsed between $t_{RX,AP2}$ and $t_1$. In other words, the response generation time instant $t_1$ is delayed by a time difference $X$ relative to the request time instance $t_{RX,requ}$, at which the ranging request message was received.

Again, as indicated in Fig. 3b, the transmitter module 210 of AP2 will also require a given processing time prior to the ranging response message being actually transmitted. Therefore, according to an embodiment of the slave transceiver apparatus 200 as, for example, AP2, the synchronizer comprises the transmit delay determiner 260 for determining a response transmit delay $\delta_{TX,resp}$ which is denoted in the following and in Fig. 3b by $\delta_{TX,AP2}$. The actual time of transmission of the ranging response message is hence

$$t_{TX,AP2} = t_1 + \delta_{TX,AP2} = t_0 + \frac{d_0}{c} + X + \delta_{TX,AP1} + \delta_{TX,AP2} \, . \qquad (3)$$

As shown in Fig. 3b the ranging response message also requires the travel time $d_0/c$.

Following the sequence shown in Fig. 3b, AP1 receives the ranging response message at

$$t_{RX,AP1} = t_0 + 2\frac{d_0}{c} + X + \delta_{TX,AP1} + \delta_{TX,AP2} \qquad (4)$$

and interprets or decodes it. Except for $\delta_{TX,AP2}$ and $d_0$ all terms of equation 4 are known to a AP1.

In some embodiments, in the timeslot following the transmission of the ranging response message, AP2 may transmit a transmission delay message comprising information on $\delta_{TX,AP2}$. The transmission delay message may further comprise one of or a combination of the group of the sequence number, a source address, a destination address, etc. The transmission delay message may be received by AP1 at

$$t_{RX,AP1,2} = t_0 + 2\frac{d_0}{c} + X + \delta_{TX,AP1} + \delta_{TX,AP2} + T_{slot} \qquad (5)$$

where the transmission delay message is transmitted $T_{slot}$ after transmission of the ranging response message.

After decoding or interpreting the transmission delay message AP1 may compute

$$d_0 = (t_{RX,AP1} - t_0 - X - \delta_{TX,AP1} - \delta_{TX,AP2})\frac{c}{2} \, . \qquad (6)$$

As already mentioned above, in other embodiments, an information on the transmit delay $\delta_{TX,AP2}$ may be comprised in the ranging response message. Subsequently, AP1 may transmit a synchronization message containing $d_0$, $t_3$ and $\delta_{TX,AP1}$ After receiving the synchronization message AP2 can completely synchronize its TDMA frame timing. In embodiments, it is conceivable, that AP2 acknowledges the synchronization to AP1 after completion, for example, by transmitting a synchronization acknowledgement message.

The synchronization of AP2 is shown in Fig. 3b by the slot boundaries 321 and 322 on the side of AP1 and the slot boundaries 331 and 332 on the side of AP2. It can be seen that slot boundaries 321 and 331 differ, whereas after the reception of the synchronization message AP2 can adjust its slot boundaries so to align slot boundaries 322 and 332. Therewith, synchronization is achieved by adjusting AP2, i.e. the slave transceiver apparatus, to AP1, i.e. the master transceiver apparatus.

Referring to the scenario depicted in Fig. 2, after synchronization of the fixed mounted infrastructure (AP1, AP2) has been established, the synchronization of the mobile device MD can be established in a similar manner. This can be carried out in the same way as it was described for the case of AP2. With respect to the scenario depicted in Fig. 2, all three nodes are then synchronized, i.e. their timeslot boundaries are aligned.

After the synchronization of the fixed mounted infrastructure and of the mobile device has been established, the second step may be carried out. In order to improve the readability in the following, the measurement and correction of the processing delays at the transmitters and receivers is neglected, however, they can be taken into account in a similar manner as it was discussed in detail for the above embodiments.

First, AP1 may transmit a time instant message, the message containing the time instant $T_0$ at the time instant $T_0$, in embodiments potentially correct by the transmit delay. The MD then receives this message at the time instant

$$T_1 = T_0 + d_1 / c \ . \qquad\qquad (7)$$

AP2 may then transmit the message containing the time difference $T_{slot}$ at the time instant $(T_0 + T_{slot})$ . The MD then receives this message at the time instant

$$T_2 = T_0 + T_{slot} + d_2 / c \ . \qquad\qquad (8)$$

Thereafter, the MD may compute

$$d_1 = c(T_1 - T_0) ,$$
$$d_2 = c(T_2 - T_0 - T_{slot}) \ . \qquad\qquad (9)$$

Finally, the MD may transmits a message containing the distance values $d_1$ and $d_2$ to the AP1.

In a last step triangulation and mapping may be carried out at the master transceiver apparatus 100. In this step, AP1 may compute the angles $\alpha$, $\beta$ and $\gamma$ . This can be accomplished by applying the following identities

$$\alpha = \arccos\left\{ \frac{(d_0)^2 + (d_2)^2 - (d_1)^2}{2d_0 d_2} \right\} \ , \qquad\qquad (10)$$

$$\beta = \arccos\left\{ \frac{(d_0)^2 + (d_1)^2 - (d_2)^2}{2d_0 d_1} \right\} \qquad\qquad (11)$$

and

$$\gamma = \pi - \alpha - \beta \ . \qquad\qquad (12)$$

After completion, the location of MD can be computed by AP1 and can be conveyed to the other UWB-RT devices if required.

It shall be mentioned that this illustration is given to explain the principle of the LT procedure, being well aware of the fact of the 180 degree ambiguity of the result. This ambiguity can be overcome in other embodiments by adding further fixed mounted APs, cf. e.g. Fig. 7 which uses four APs. In these embodiments, synchronization and range determination can be carried out along the lines of the above described embodiments.

Depending on certain implementation requirements of the inventive methods, the inventive methods can be implemented in hardware or in software. The implementation can be performed using a digital storage medium, in particular a disc, a DVD or a CD having electronically readable control signals stored thereon, which cooperate with the programmable computer system such that the inventive methods are performed. Generally, the present invention may be, therefore, a computer program product with a program code stored on a machine readable carrier, the program code being operative for performing one of the inventive methods when the computer program runs on a computer. In other words, the inventive methods are, therefore, a computer program having a program code for performing at least one of the inventive methods when the computer program runs on a computer.

It is to be understood that various changes may be made in adapting to different embodiments without departing from the broader concepts disclosed herein and comprehended by the claims that follow.

**Claims**

1. A master transceiver apparatus (100) being adapted for determining a range information, comprising
   a transmitter module (110) for transmitting messages;
   a receiver module (120) for receiving messages;
   a range determiner (130) for determining the range information, the range determiner (130) being coupled to the transmitter module (110) and the receiver module (120),
   the range determiner (130) comprising a message generator (140) for generating a ranging request message at a first time instant (to) for transmitting; the range determiner (130) comprising a transmit delay determiner (150) for determining a request transmit delay ($\delta_{TX,requ}$) between the first time instant ($t_0$) when the ranging request message is generated and a transmission time instant ($t_0+\delta_{TX,requ}$) when the ranging request message is actually transmitted by the transmitter module (110);
   the range determiner (130) comprising a message interpreter (160) for interpreting a ranging response message associated with the ranging request message received at a receive response time instant ($t_{RX,resp}$) comprising an information on a time difference ($X$) indicating a delay between the time of reception of the ranging request message and the time of generation of the ranging response message;
   the range determiner (130) being further adapted for determining the range information based on the receive response time instant ($t_{RX,resp}$), the first time instant ($t_0$), the request transmit delay ($\delta_{TX,requ}$) and the time difference ($X$), wherein the message generator (140) is adapted for generating a synchronization message at an other time instant ($t_3$) for transmitting, the synchronization message comprising an information on the range information and an information on when the synchronization message is transmitted.

2. The master transceiver apparatus (100) of claim 1, wherein the range determiner (130) is adapted for determining the range information in terms of an information on a propagation time or an information on a propagation distance of the ranging request message and/or the ranging response message.

3. The master transceiver apparatus (100) of one of the preceding claims, wherein the range determiner (130) is adapted for determining the range information based on a response transmit delay ($\delta_{TX,resp}$) between a second time instant ($t_1$) at which the ranging response message is generated and a response transmission time instant ($t_1+\delta_{TX,resp}$) at which the ranging response message is actually transmitted, an information on the response transmit delay ($\delta_{TX,resp}$) being comprised in the ranging response message or in a received transmit delay message.

4. The master transceiver apparatus (100) of claim 3, wherein the information on the response transmit delay ($\delta_{TX,resp}$) is comprised in the received transmit delay message, the transmit delay message being generated at a third time instant ($t_2$), transmitted at a transmit delay time instant ($t_2+\delta_{TX,TX-delay}$) and received at a predetermined time ($T_{slot}$) after reception of the ranging response message at ($t_{RX,resp}$)

5. The master transceiver apparatus (100) of one of the claims 1 to 4, wherein the information on when the synchronization message is transmitted comprises an information on the fourth time instant ($t_3$) and/or an information on a synchronization transmit delay ($\delta_{TX,sync}$) between the fourth time instant ($t_3$) and a transmission synchronization time instant ($t_3+\delta_{TX,sync}$) when the synchronization message is actually transmitted by the transmitter module (110).

6. The master transceiver apparatus (100) of one of the preceding claims, wherein the message generator (140) is adapted for generating a time instant message, the time instant message comprising information on a generation time instant ($T_0$) at which the time instant message is generated and/or an information on a time instant transmit delay ($\delta_{TX,time}$) between the generation time instant ($T_0$) and the time instant ($T_0+\delta_{TX,time}$) at which the time instant message is actually transmitted by the transmitter module (110).

7. The master transceiver apparatus (100) of claim 6, wherein the message interpreter (150) is adapted for interpreting a received propagation information message comprising an information on a propagation time or a propagation distance between a transmitter of the propagation information message and the master transceiver apparatus (100) and/or information on another distance between the transmitter of the propagation information message and an other transceiver.

8. A method for determining a range information, comprising the steps of
   generating a ranging request message at the first time instant ($t_0$);
   transmitting the ranging request message;
   determining a request transmit delay ($\delta_{TX,requ}$) between the first time instant ($t_0$) when the ranging request message is generated and a transmission time instant ($t_0+\delta_{TX,requ}$) when the ranging request message is actually transmitted;

receiving a ranging response message associated with the ranging request message at a receive response time instant ($t_{RX,resp}$) ;

interpreting the ranging response message, the ranging response message comprising an information on a time difference ($X$) indicating a delay between the time of reception of the ranging request message and the time of generation of the ranging response message;

determining the range information based on the receive response time instant ($t_{RX,resp}$) , the first time instant ($t_0$), the request transmit delay ($\delta_{TX,requ}$) and the time difference ($X$);

generating a synchronization message at an other time instant ($t_3$) for transmitting, the synchronization message comprising an information on the range information and an information on when the synchronization message is transmitted.

9. A slave transceiver apparatus (200) being adapted for synchronizing with a master transceiver, comprising

a transmitter module (210) for transmitting messages;

a receiver module (220) for receiving messages;

a synchronizer (230) comprising a message interpreter (240) and message generator (250);

the message interpreter (240) is adapted for interpreting a received ranging request message, the ranging request message being received at a request time instant ($t_{RX,requ}$),

the message generator (250) is adapted for generating a ranging response message associated with the ranging request message at a response generation time instant ($t_1$), the response generation time instant ($t_1$) being delayed by a time difference ($X$) relative to the request time instant ($t_{RX,requ}$) ;

the message generator (250) being further adapted for generating the ranging response message such that it comprises information on the time difference ($X$);

the synchronizer (230) further comprising a transmit delay determiner (260) for determining a response transmit delay ($\delta_{TX,resp}$) between the response generation time instant ($t_1$) and a response transmit time instant ($t_1+\delta_{TX,resp}$) when the ranging response message is actually transmitted by the transmitter module (210);

and wherein the message generator (250) is adapted for generating the ranging response message such that it comprises an information on the response transmit delay ($\delta_{TX,resp}$) or for generating a transmit delay message comprising the information on the response transmit delay ($\delta_{TX,resp}$) for transmission;

wherein the message interpreter (240) is further adapted for interpreting a synchronization message received subsequently to transmitting the ranging response message to obtain a range information as basis for synchronizing with the master transceiver.

10. The slave transceiver apparatus (200) of claim 10, wherein the range information comprises an information on a propagation time or an information on a propagation distance of the ranging request message and/or the ranging response message.

11. The slave transceiver apparatus (200) of one of the claims 9 or 10, wherein the synchronization message further comprises an information on a request generation time instant ($t_0$) when the ranging request message was generated and on a request transmit delay ($\delta_{TX,requ}$) between the request generation time instant ($t_0$) and a request transmit time instant ($t_0+\delta_{TX,requ}$) when the ranging request message was actually transmitted and wherein the synchronizer (230) is adapted for synchronizing with the master transceiver by considering the request generation time instant ($t_0$), the request transmit delay ($\delta_{TX,requ}$), the range information and the request time instant ($t_{RX,requ}$),

or

wherein the synchronization message further comprises an information on a synchronization generation time instant ($t_3$), when the synchronization message was generated and on a synchronization transmit delay ($\delta_{TX,sync}$) between the synchronization generation time instant ($t_3$) and the synchronization transmit instant ($t_3+\delta_{TX,sync}$) when the synchronization message was actually transmitted,

and wherein the synchronizer (230) is adapted for synchronizing with the master transceiver by considering the synchronization generation time instant ($t_3$), the synchronization transmit delay ($\delta_{TX,sync}$), the range information and a reception time instant of when the synchronization message was received.

12. The slave transceiver apparatus (200) of one of the claims 9 to 11, wherein the message interpreter (240) is adapted for interpreting a time instant message to obtain an information on a time instant ($T_0$) at which the time instant message was generated and/or an information on a time instant transmit delay ($\delta_{TX,time}$) between the time instant ($T_0$) at which the time instant message was generated and the time instant ($T_0+\delta_{TX,time}$) at which the time instant message was actually transmitted, the time instant message being received at a received time instant ($T_1$).

wherein the slave transceiver apparatus (200) further comprises a processor for processing the information on the time instant ($T_0$), the received time instant ($T_1$) and/or the time instant transmit delay ($\delta_{TX,time}$) to obtain a propagation time or a propagation distance of the time instant message, wherein the message generator (240) is adapted for generating a propagation information message comprising an information on the propagation time or the propagation distance for transmission.

13. A method for synchronizing with a master transceiver, comprising the steps of
receiving a ranging request message at a request time instant ($t_{RX,requ}$) ;
interpreting the received ranging request message; generating a ranging response message associated with the ranging request message at the response generation time instant ($t_1$), the response generation time instant ($t_1$) being delayed by a time difference ($X$) relative to the request time instant ($t_{RX,requ}$), the ranging response message comprising an information on the time difference ($X$);
determining a response transmission delay ($\delta_{TX,resp}$) between the response generation time instant ($t_1$) and a response transmit time instant ($t_1+\delta_{TX,resp}$) when the ranging response message is actually transmitted;
generating the ranging response message such that it comprises an information on the response transmit delay ($\delta_{TX,resp}$)
or
generating a transmit delay message comprising the information on the response transmit delay ($\delta_{TX,resp}$) for transmission;
transmitting the ranging response message or the transmit delay message;
receiving a synchronization message;
interpreting the synchronization message to obtain a range information as basis for synchronizing with the master transceiver.

14. Computer program having a program code for performing one of the methods of claims 8 or 13 when the computer program runs on a computer or processor.

**Patentansprüche**

1. Eine Master-Sende-/Empfangsvorrichtung (100), die zum Bestimmen von Bereichsinformationen angepasst ist und folgende Merkmale aufweist:

ein Sendermodul (110) zum Senden von Nachrichten;
ein Empfängermodul (120) zum Empfangen von Nachrichten;
einen Bereichsbestimmer (130) zum Bestimmen der Bereichsinformationen, wobei der Bereichsbestimmer (130) mit dem Sendermodul (110) und dem Empfängermodul (120) gekoppelt ist,
wobei der Bereichsbestimmer (130) einen Nachrichtenerzeuger (140) zum Erzeugen einer Bereichsfindungsanforderungsnachricht zu einem ersten Zeitpunkt ($t_0$) zum Senden aufweist; wobei der Bereichsbestimmer (130) einen Sendeverzögerungsbestimmer (150) zum Bestimmen einer Anforderungssendeverzögerung ($\delta_{TX,requ}$) zwischen dem ersten Zeitpunkt ($t_0$), zu dem die Bereichsfindungsanforderungsnachricht erzeugt wird, und einem Sendezeitpunkt ($t_0+\delta_{TX,qu}$), zu dem die Bereichsfindungsanforderungsnachricht tatsächlich seitens des Sendermoduls (110) gesendet wird, aufweist; wobei der Bereichsbestimmer (130) einen Nachrichteninterpretierer (160) zum Interpretieren einer Bereichsfindungsantwortnachricht aufweist, die der Bereichsfindungsanforderungsnachricht zugeordnet ist, die zu einem Empfangsantwortzeitpunkt ($t_{RX,resp}$) empfangen wird, der Informationen über eine Zeitdifferenz ($X$) aufweist, die eine Verzögerung zwischen der Zeit des Empfangs der Bereichsfindungsanforderungsnachricht und der Zeit der Erzeugung der Bereichsfindungsantwortnachricht angibt;
wobei der Bereichsbestimmer (130) ferner zum Bestimmen der Bereichsinformationen auf der Basis des Empfangsantwortzeitpunkts ($t_{RX,resp}$), des ersten Zeitpunkts ($t_0$), der Anforderungssendeverzögerung ($\delta_{TX,requ}$) und der Zeitdifferenz ($X$) angepasst ist, wobei der Nachrichtenerzeuger (140) zum Erzeugen einer Synchronisationsnachricht zu einem anderen Zeitpunkt ($t_3$) zum Senden angepasst ist, wobei die Synchronisationsnachricht Informationen über die Bereichsinformationen und Informationen darüber aufweist, wann die Synchronisationsnachricht gesendet wird.

2. Die Master-Sende-/Empfangsvorrichtung (100) gemäß Anspruch 1, bei der der Bereichsbestimmer (130) zum Bestimmen der Bereichsinformationen bezüglich Informationen über eine Ausbreitungszeit oder Informationen über eine Ausbreitungsentfernung der Bereichsfindungsanforderungsnachricht und/oder der Bereichsfindungsantwortnachricht angepasst ist.

3. Die Master-Sende-/Empfangsvorrichtung (100) gemäß einem der vorhergehenden Ansprüche, bei der der Bereichsbestimmer (130) zum Bestimmen der Bereichsinformationen auf der Basis einer Antwortsendeverzögerung ($\delta_{TX,resp}$) zwischen einem zweiten Zeitpunkt *(t_1),* zu dem die Bereichsfindungsantwortnachricht erzeugt wird, und einem Antwortsendezeitpunkt ($t1+\delta_{TX,resp}$)*,* zu dem die Bereichsfindungsantwortnachricht tatsächlich gesendet wird, angepasst ist, wobei Informationen über die Antwortsendeverzögerung ($\delta_{TX,resp}$) in der Bereichsfindungsantwortnachricht oder in einer empfangenen Sendeverzögerungsnachricht enthalten sind.

4. Die Master-Sende-/Empfangsvornchtung (100) gemäß Anspruch 3, bei der die Informationen über die Antwortsendeverzögerung ($\delta_{TX,resp}$) in der empfangenen Sendeverzögerungsnachricht enthalten sind, wobei die Sendeverzögerungsnachricht zu einem dritten Zeitpunkt ($t_2$) erzeugt wird, zu einem Sendeverzögerungszeitpunkt ($t_2+\delta_{TX,TX-delay}$) gesendet wird und zu einer vorbestimmten Zeit ($T_{slot}$) nach Empfang der Bereichsfindungsantwortnachricht bei ($t_{RX,resp}$)empfangen wird.

5. Die Master-Sende-/Empfangsvorrichtung (100) gemäß einem der Ansprüche 1 bis 4, bei der die Informationen darüber, wann die Synchronisationsnachricht gesendet wird, Informationen über den vierten Zeitpunkt ($t_3$) und/oder Informationen über eine Synchronisationssendeverzögerung ($\delta_{TX,sync}$) zwischen dem vierten Zeitpunkt ($t_3$) und einem Sendesynchronisationszeitpunkt ($t_3+\delta_{TX,sync}$)*,* zu dem die Synchronisationsnachricht tatsächlich seitens des Sendermoduls (110) gesendet wird, umfassen.

6. Die Master-Sende-/Empfangsvorrichtung (100) gemäß einem der vorhergehenden Ansprüche, bei der der Nachrichtenerzeuger (140) zum Erzeugen einer Zeitpunktnachricht angepasst ist, wobei die Zeitpunktnachricht Informationen über einen Erzeugungszeitpunkt ($T_0$), zu dem die Zeitpunktnachricht erzeugt wird, und/oder Informationen über eine Zeitpunktsendeverzögerung ($\delta_{TX,time}$) zwischen dem Erzeugungszeitpunkt ($T_0$) und dem Zeitpunkt ($T_0+\delta_{TX,time}$), zu dem die Zeitpunktnachricht tatsächlich seitens des Sendermoduls (110) gesendet wird, aufweist.

7. Die Master-Sende-/Empfangsvorrichtung (100) gemäß Anspruch 6, bei der der Nachrichteninterpretierer (150) zum Interpretieren einer empfangenen Ausbreitungsinformationsnachricht angepasst ist, die Informationen über eine Ausbreitungszeit oder eine Ausbreitungsentfernung zwischen einem Sender der Ausbreitungsinformationsnachricht und der Master-Sende-/Empfangsvorrichtung (100) und/oder Informationen über eine andere Entfernung zwischen dem Sender der Ausbreitungsinformationsnachricht und einer anderen Sende-/Empfangsvornchtung aufweist.

8. Ein Verfahren zum Bestimmen der Bereichsinformationen, das folgende Schritte aufweist:

   Erzeugen einer Bereichsfindungsanforderungsnachricht zu dem ersten Zeitpunkt ($t_0$);
   Senden der Bereichsfindungsanforderungsnachricht;
   Bestimmen einer Anforderungssendeverzögerung ($\delta_{TX,requ}$) zwischen dem ersten Zeitpunkt ($t_0$)*,* zu dem die Bereichsfindungsanforderungsnachricht erzeugt wird, und einem Sendezeitpunkt ($t_0+\delta_{TX,requ}$), zu dem die Bereichsfindungsanforderungsnachricht tatsächlich gesendet wird;
   Empfangen einer Bereichsfindungsantwortnachricht, die der Bereichsfindungsanforderungsnachricht zugeordnet ist, zu einem Empfangsantwortzeitpunkt ($t_{RX,resp}$);
   Interpretieren der Bereichsfindungsantwortnachricht, wobei die Bereichsfindungsantwortnachricht Informationen über eine Zeitdifferenz *(X)* aufweist, die eine Verzögerung zwischen dem Zeitpunkt des Empfangs der Bereichsfindungsanforderungsnachricht und dem Zeitpunkt der Erzeugung der Bereichsfindungsantwortnachricht angibt;
   Bestimmen der Bereichsinformationen auf der Basis des Empfangsantwortzeitpunkts ($t_{RX,resp}$)*,* des ersten Zeitpunkts *(t_0),* der Anforderungssendeverzögerung ($\delta_{TX,requ}$) und der Zeitdifferenz (*X*);
   Erzeugen einer Synchronisationsnachricht zu einem anderen Zeitpunkt ($t_3$) zum Senden, wobei die Synchronisationsnachricht Informationen über die Bereichsinformationen und Informationen darüber, wann die Synchronisationsnachricht gesendet wird, aufweist.

9. Eine Slave-Sende-/Empfangsvorrichtung (200), die zum Synchronisieren mit einer Master-Sende-/Empfangsvornchtung angepasst ist und folgende Merkmale aufweist:

   ein Sendermodul (210) zum Senden von Nachrichten;
   ein Empfängermodul (220) zum Empfangen von Nachrichten;
   einen Synchronisierer (230), der einen Nachrichteninterpretierer (240) und einen Nachrichtenerzeuger (250) aufweist; der Nachrichteninterpretierer (240) ist zum Interpretieren einer empfangenen Bereichsfindungsanforderungsnachricht angepasst, wobei die Bereichsfindungsanforderungsnachricht zu einem Anforderungszeitpunkt ($t_{RX,requ}$) empfangen wird,

der Nachrichtenerzeuger (250) ist zum Erzeugen einer Bereichsfindungsantwortnachricht, die der Bereichsfindungsanforderungsnachricht zugeordnet, zu einem Antworterzeugungszeitpunkt ($t_1$) angepasst ist, wobei der Antworterzeugungszeitpunkt ($t_1$) um eine Zeitdifferenz ($X$) relativ zu dem Anforderungszeitpunkt ($t_{RX,requ}$) verzögert ist;

wobei der Nachrichtenerzeuger (250) ferner zum Erzeugen der Bereichsfindungsantwortnachricht derart, dass sie Informationen über die Zeitdifferenz ($X$) aufweist, angepasst ist;

wobei der Synchronisierer (230) ferner einen Sendeverzögerungsbestimmer (260) zum Bestimmen einer Antwortsendeverzögerung ($\delta_{XT,resp}$) zwischen dem Antworterzeugungszeitpunkt ($t_1$) und einem Antwortsendezeitpunkt ($t_1+\delta_{TX,resp}$), zu dem die Bereichsfindungsantwortnachricht tatsächlich seitens des Sendermoduls (210) gesendet wird, aufweist;

und wobei der Nachrichtenerzeuger (250) zum Erzeugen der Bereichsfindungsantwortnachricht derart, dass sie Informationen über die Antwortsendeverzögerung ($\delta_{TX,resp}$) aufweist, oder zum Erzeugen einer Sendeverzögerungsnachricht, die die Informationen über die Antwortsendeverzögerung ($\delta_{TX,resp}$) zum Senden aufweist, angepasst ist;

wobei der Nachrichteninterpretierer (240) ferner zum Interpretieren einer Synchronisationsnachricht angepasst ist, die anschließend an das Senden der Bereichsfindungsantwortnachricht empfangen wird, um Bereichsinformationen als Basis zum Synchronisieren mit der Master-Sende-/Empfangsvorrichtung zu erhalten.

**10.** Die Slave-Sende-/Empfangsvorrichtung (200) gemäß Anspruch 10, bei der die Bereichsinformationen Informationen über eine Ausbreitungszeit oder Informationen über eine Ausbreitungsentfernung der Bereichsfindungsanforderungsnachricht und/oder der Bereichsfindungsantwortnachricht aufweisen.

**11.** Die Slave-Sende-/Empfangsvornchtung (200) gemäß einem der Ansprüche 9 oder 10, bei der die Synchronisationsnachricht ferner Informationen über einen Anforderungserzeugungszeitpunkt ($t_0$), zu dem die Bereichsfindungsanforderungsnachricht erzeugt wurde, und über eine Anforderungssendeverzögerung ($\delta_{TX,requ}$) zwischen dem Anforderungserzeugungszeitpunkt ($t_0$) und einem Anforderungssendezeitpunkt ($t_0+\delta_{TX,requ}$), zu dem die Bereichsfindungsanforderungsnachricht tatsächlich gesendet wurde, aufweist, und bei der der Synchronisierer (230) zum Synchronisieren mit der Master-Sende-/Empfangsvornchtung durch Berücksichtigen des Anforderungserzeugungszeitpunkts ($t_0$), der Anforderungssendeverzögerung ($\delta_{TX,requ}$), der Bereichsinformationen und des Anforderungszeitpunkts ($t_{RX,requ}$) angepasst ist,

oder

bei der die Synchronisationsnachricht ferner Informationen über einen Synchronisationserzeugungszeitpunkt ($t_3$), zu dem die Synchronisationsnachricht erzeugt wurde, und über eine Synchronisationssendeverzögerung ($\delta_{TX,sync}$) zwischen dem Synchronisationserzeugungszeitpunkt ($t_3$) und dem Synchronisationssendezeitpunkt ($t_3+\delta_{TX,sync}$), zu dem die Synchronisationsnachricht tatsächlich gesendet wurde, aufweist,

und bei der der Synchronisierer (230) zum Synchronisieren mit der Master-Sende-/Empfangsvorrichtung durch Berücksichtigen des Synchronisationserzeugungszeitpunkts ($t_3$), der Synchronisationssendeverzögerung ($\delta_{TX,sync}$), der Bereichsinformationen und eines Empfangszeitpunkts, zu dem die Synchronisationsnachricht empfangen wurde, angepasst ist.

**12.** Die Slave-Sende-/Empfangsvorrichtung (200) gemäß einem der Ansprüche 9 bis 11, bei der der Nachrichteninterpretierer (240) zum Interpretieren einer Zeitpunktnachricht angepasst ist, um Informationen über einen Zeitpunkt $T_0$), zu dem die Zeitpunktnachricht erzeugt wurde, und/oder Informationen über eine Zeitpunktsendeverzögerung ($\delta_{TX,time}$) zwischen dem Zeitpunkt ($T_0$), zu dem die Zeitpunktnachricht erzeugt wurde, und dem Zeitpunkt ($T_0+\delta_{TX,time}$), zu dem die Zeitpunktnachricht tatsächlich gesendet wurde, zu erhalten, wobei die Zeitpunktnachricht zu einem Empfangszeitpunkt ($T_1$) empfangen wird,

wobei die Slave-Sende-/Empfangsvornchtung (200) ferner einen Prozessor zum Verarbeiten der Informationen über den Zeitpunkt ($T_0$), den Empfangszeitpunkt ($T_1$) und/oder die Zeitpunktsendeverzögerung ($\delta_{TX,time}$) aufweist, um eine Ausbreitungszeit oder eine Ausbreitungsentfernung der Zeitpunktnachricht zu erhalten, wobei der Nachrichtenerzeuger (240) zum Erzeugen einer Ausbreitungsinformationsnachricht angepasst ist, die Informationen über die Ausbreitungszeit oder die Ausbreitungsentfernung zum Senden aufweist.

**13.** Ein Verfahren zum Synchronisieren mit einer Master-Sende-/Empfangsvornchtung, das folgende Schritte aufweist:

Empfangen einer Bereichsfindungsanforderungsnachricht zu einem Anforderungszeitpunkt ($t_{RX,requ}$);

Interpretieren der empfangenen Bereichsfindungsanforderungsnachricht;

Erzeugen einer Bereichsfindungsantwortnachricht, die der Bereichsfindungsanforderungsnachricht zugeordnet ist, zu dem Antworterzeugungszeitpunkt $(t_1)$, wobei der Antworterzeugungszeitpunkt $(t_1)$ um eine Zeitdifferenz $(X)$ relativ zu dem Anforderungszeitpunkt $(t_{RX,requ})$ verzögert ist, wobei die Bereichsfindungsantwortnachricht Informationen über die Zeitdifferenz $(X)$ aufweist;

Bestimmen einer Antwortsendeverzögerung $(\delta_{TX,resp})$ zwischen dem Antworterzeugungszeitpunkt $(t_1)$ und einem Antwortsendezeitpunkt $(t_1-\delta_{TX,resp})$ zu dem die Bereichsfindungsantwortnachricht tatsächlich gesendet wird;

Erzeugen der Bereichsfindungsantwortnachricht derart, dass sie Informationen über die Antwortsendeverzögerung $(\delta_{TX,resp})$ aufweist oder

Erzeugen einer Sendeverzögerungsnachricht, die die Informationen über die Antwortsendeverzögerung $(\delta_{TX,resp})$ zum Senden aufweist;

Senden der Bereichsfindungsantwortnachricht oder der Sendeverzögerungsnachricht;

Empfangen einer Synchronisationsnachricht;

Interpretieren der Synchronisationsnachricht, um Bereichsinformationen als Basis zum Synchronisieren mit der Master-Sende-/Empfangsvornchtung zu erhalten.

**14.** Computerprogramm, das einen Programmcode zum Ausführen eines der Verfahren gemäß Anspruch 8 oder 13 aufweist, wenn das Computerprogramm auf einem Computer oder Prozessor abläuft.

**Revendications**

**1.** Appareil émetteur-récepteur maître (100) adapté pour déterminer une information de plage, comprenant

un module émetteur (110) destiné à émettre des messages;

un module récepteur (120) destiné à recevoir des messages;

un déterminateur de plage (130) destiné à déterminer l'information de plage, le déterminateur de plage (130) étant couplé au module émetteur (110) et au module récepteur (120),

le déterminateur de plage (130) comprenant un générateur de message (140) destiné à générer un message de demande de détermination de plage à un premier moment $(t_0)$ pour l'émission;

le déterminateur de plage (130) comprenant un déterminateur de retard d'émission (150) destiné à déterminer un retard d'émission de demande $(\delta_{TX,requ})$ entre le premier moment $(t_0)$ où est généré le message de demande de détermination de plage et un moment d'émission $(t_0+\delta_{TX,requ})$ où le message de demande de détermination de plage est effectivement transmis par le module émetteur (110);

le déterminateur de plage (130) comprenant un interprétateur de message (160) destiné à interpréter un message de réponse de détermination de plage associé au message de demande de détermination de plage reçu à un moment de réception de réponse $(t_{RX,resp})$ comprenant une information sur une différence de temps $(X)$ indiquant un retard entre le moment de la réception du message de demande de détermination de plage et le moment de la génération du message de réponse de détermination de plage;

le déterminateur de plage (130) étant par ailleurs adapté pour déterminer l'information de plage sur base du moment de réponse de réception $(t_{RX,resp})$, du premier moment $(t_0)$, du retard d'émission de demande $(t_{RX,requ})$ et de la différence de temps $(X)$, où le générateur de message (140) est adapté pour générer un message de synchronisation à un autre moment $(t_3)$ pour émettre, le message de synchronisation comprenant une information sur l'information de plage et une information sur le moment où est transmis le message de synchronisation.

**2.** Appareil émetteur-récepteur maître (100) selon la revendication 1, dans lequel le déterminateur de plage (130) est adapté pour déterminer l'information de plage en termes d'information sur le temps de propagation ou d'information sur une distance de propagation du message de demande de détermination de plage et/ou du message de réponse de détermination de plage.

**3.** Appareil émetteur-récepteur maître (100) selon l'une des revendications précédentes, dans lequel le déterminateur de plage (130) est adapté pour déterminer l'information de plage sur base d'un retard d'émission de réponse $(\delta_{TX,resp})$ entre un deuxième moment $(t_1)$ auquel est généré le message de réponse de détermination de plage et un moment d'émission de réponse $(t_1+\delta_{TX,resp})$ auquel est effectivement émis le message de réponse de détermination de plage, une information sur le retard d'émission de réponse $(\delta_{TX,resp})$ étant comprise dans le message de réponse de détermination de plage ou dans un message de retard d'émission reçu.

**4.** Appareil émetteur-récepteur maître (100) selon la revendication 3, dans lequel l'information sur le retard d'émission

de réponse ($\delta_{TX,resp}$) est comprise dans le message de retard d'émission reçu, le message de retard d'émission étant généré à un troisième moment ($t_2$), émis à un moment de retard d'émission ($t_2+\delta_{TX,TX-delay}$) et reçu à un moment prédéterminé ($T_{slot}$) après réception du message de réponse de détermination de plage à ($t_{RX,resp}$).

5. Appareil émetteur-récepteur maître (100) selon l'une des revendications 1 à 4, dans lequel l'information sur le moment où est émis le message de synchronisation comprend une information sur le quatrième moment ($t_3$) et/ou une information sur un retard d'émission de synchronisation ($\delta_{TX,sync}$) entre le quatrième moment ($t_3$) et un moment de synchronisation d'émission ($t_3+\delta_{TX,sync}$) où le message de synchronisation est effectivement émis par le module émetteur (110).

6. Appareil émetteur-récepteur maître (100) selon l'une des revendications précédentes, dans lequel le générateur de message (140) est adapté pour générer un message de moment, le message de moment comprenant des informations sur un moment de génération ($T_0$) auquel est généré le message de moment et/ou une information sur un retard d'émission de moment ($\delta_{TX,time}$) entre le moment de génération ($T_0$) et le moment ($T_0+\delta_{TX,time}$) auquel le message de moment est effectivement émis par le module émetteur (110).

7. Appareil émetteur-récepteur maître (100) selon la revendication 6, dans lequel l'interprétateur de message (150) est adapté pour interpréter un message d'information de propagation reçu comprenant une information sur un temps de propagation ou une distance de propagation entre un émetteur du message d'information de propagation et l'appareil émetteur-récepteur maître (100) et/ou des informations sur une autre distance entre l'émetteur du message d'information de propagation et un autre émetteur-récepteur.

8. Procédé pour déterminer une information de plage, comprenant les étapes consistant à
générer un message de demande de détermination de plage au premier moment ($t_0$);
émettre le message de demande de détermination de plage;
déterminer un retard d'émission de demande ($\delta_{TX,requ}$) entre le premier moment ($t_0$) où est généré le message de demande de détermination de plage et un moment d'émission ($t_0+\delta_{TX,requ}$) où est effectivement émis le message de demande de détermination de plage;
recevoir un message de réponse de détermination de plage associé au message de demande de détermination de plage à un moment de réponse de réception ($t_{RX,resp}$);
interpréter le message de réponse de détermination de plage, le message de réponse de détermination de plage comprenant une information sur une différence de temps ($X$) indiquant un retard entre le moment de réception du message de demande de détermination de plage et le moment de la génération du message de réponse de détermination de plage;
déterminer l'information de plage sur base du moment de réponse de réception ($t_{RX,resp}$), du premier moment ($t_0$), du retard d'émission de demande ($\delta_{TX,requ}$) et de la différence de temps ($X$);
générer un message de synchronisation à un autre moment ($t_3$) pour émettre le message de synchronisation comprenant une information sur l'information de plage et une information sur le moment où est émis le message de synchronisation.

9. Appareil émetteur-récepteur esclave (200) adapté pour se synchroniser avec un appareil émetteur-récepteur maître, comprenant
un module émetteur (210) destiné à émettre des messages;
un module récepteur (220) destiné à recevoir des messages;
un synchroniseur (230) comprenant un interprétateur de message (240) et un générateur de message (250);
l'interprétateur de message (240) est adapté pour interpréter un message de demande de détermination de plage reçu, le message de demande de détermination de plage étant reçu à un moment de demande ($t_{RX,requ}$),
le générateur de message (250) est adapté pour générer un message de réponse de détermination de plage associé au message de demande de détermination de plage à un moment de génération de réponse ($t_1$), le moment de génération de réponse ($t_1$) étant retardé d'une différence de temps ($X$) par rapport au moment de demande ($t_{RX,requ}$);
le générateur de message (250) étant par ailleurs adapté pour générer le message de réponse de détermination de plage de sorte qu'il comprenne des informations sur la différence de temps ($X$); le synchroniseur (230) comprenant par ailleurs un déterminateur de retard d'émission (260) destiné à déterminer un retard d'émission de réponse ($\delta_{TX,resp}$) entre le moment de génération de réponse ($t_1$) et un moment d'émission de réponse ($t_1+\delta_{TX,resp}$) où le message de réponse de détermination de plage est effectivement émis par le module émetteur (210);
et dans lequel le générateur de message (250) est adapté pour générer le message de réponse de détermination de plage de sorte qu'il comprenne une information sur le retard d'émission de réponse ($\delta_{TX,resp}$) ou pour générer un message de retard d'émission comprenant l'information sur le retard d'émission de réponse ($\delta_{TX,resp}$) pour

l'émission;
dans lequel l'interprétateur de message (240) est par ailleurs adapté pour interpréter un message de synchronisation reçu après l'émission du message de réponse de détermination de plage, pour obtenir une information de plage comme base pour la synchronisation avec l'émetteur-récepteur maître.

10. Appareil émetteur-récepteur esclave (200) selon la revendication 10, dans lequel l'information de plage comprend une information sur une distance de propagation du message de demande de détermination de plage et/ou du message de réponse de détermination de plage.

11. Appareil émetteur-récepteur esclave (200) selon l'une des revendications 9 ou 10, dans lequel le message de synchronisation comprend par ailleurs une information sur un moment de génération de demande ($t_0$) où a été généré le message de demande de détermination de plage et sur un retard d'émission de demande ($\delta_{TX,requ}$) entre le moment de génération de demande ($t_0$) et un moment d'émission de demande ($t_0 + \delta_{TX,requ}$) où le message de demande de détermination de plage a effectivement été émis, et dans lequel le synchroniseur (230) est adapté pour se synchroniser avec l'émetteur-récepteur maître en tenant compte du moment de génération de demande ($t_0$), du retard d'émission de demande ($\delta_{TX,requ}$), de l'information de plage et du moment de demande ($\delta_{RX,requ}$), ou dans lequel le message de synchronisation comprend par ailleurs une information sur un moment de génération de synchronisation ($t_3$) où a été généré le message de synchronisation et sur un retard d'émission de synchronisation ($\delta_{TX,sync}$) entre le moment de génération de synchronisation ($t_3$) et le moment d'émission de synchronisation ($t_3 + \delta_{TX,sync}$) où a effectivement été émis le message de synchronisation, et dans lequel le synchroniseur (230) est adapté pour se synchroniser avec l'émetteur-récepteur maître en tenant compte du moment de génération de synchronisation ($t_3$), du retard d'émission de synchronisation ($\delta_{TX,sync}$), de l'information de plage et d'un moment de réception où a été reçu le message de synchronisation.

12. Appareil émetteur-récepteur esclave (200) selon l'une des revendications 9 à 11, dans lequel l'interprétateur de message (240) est adapté pour interpréter un message de moment, pour obtenir une information sur un moment ($T_0$) auquel a été généré le message de moment et/ou une information sur un retard d'émission de moment ($\delta_{TX,time}$) entre le moment ($T_0$) auquel a été généré le message de moment et le moment ($T_0 + \delta_{TX,time}$) auquel a effectivement été émis le message de moment, le message de moment étant reçu à un moment de réception ($T_1$), dans lequel l'appareil émetteur-récepteur esclave (200) comprend par ailleurs un processeur destiné à traiter l'information sur le moment ($T_0$), le moment de réception ($T_1$) et/ou le retard d'émission de moment ($\delta_{TX,time}$), pour obtenir un temps de propagation ou une distance de propagation du message de moment, dans lequel le générateur de message (240) est adapté pour générer un message d'information de propagation comprenant une information sur le temps de propagation ou la distance de propagation pour émission.

13. Procédé de synchronisation avec un émetteur-récepteur maître, comprenant les étapes consistant à recevoir un message de demande de détermination de plage à un moment de demande ($t_{RX,requ}$);
interpréter le message de demande de détermination de plage reçu; générer un message de réponse de détermination de plage associé au message de demande de détermination de plage au moment de génération de réponse ($t_1$), le moment de génération de réponse ($t_1$) étant retardé d'une différence de temps ($X$) par rapport au moment de demande ($t_{RX,requ}$), le message de réponse de détermination de plage comprenant une information sur la différence de temps ($X$);
déterminer un retard d'émission de réponse ($\delta_{TX,esp}$) entre le moment de génération de réponse ($t_1$) et un moment d'émission de réponse ($t_1 + \delta_{TX,resp}$) où le message de réponse de détermination de plage est effectivement émis;
générer le message de réponse de détermination de plage de sorte qu'il comprenne une information sur le retard d'émission de réponse ($\delta_{TX,resp}$), ou
générer un message de retard d'émission comprenant l'information sur le retard d'émission de réponse ($\delta_{TX,resp}$) pour émission;
émettre le message de réponse de détermination de plage ou le message de retard d'émission;
recevoir un message de synchronisation;
interpréter le message de synchronisation, pour obtenir une information de plage comme base pour la synchronisation avec l'émetteur-récepteur maître.

14. Programme d'ordinateur présentant un code de programme pour réaliser l'un des procédés selon les revendications 8 ou 13 lorsque le programme d'ordinateur est exécuté sur un ordinateur ou un processeur.

FIG 1A

range determiner

message generator 140

ranging request message

transmitter module 110

tx-delay determiner 150

range information

message interpreter 160

ranging response message

receiver module 120

130

EP 2 244 098 B1

FIG 1B

EP 2 244 098 B1

Master transceiver (100)                    Slave transceiver (200)

$t_0$

$t_0 + \delta_{TxRequ}$

ranging request message

$t_{RxRequ}$

X

$t_1$

ranging response message
X

$t_1 + \delta_{TxResp}$

$t_{RxResp}$

range information
$(t_0, S_{TxRequ}, t_{RxResp}, X)$

synchronisation message
range information

FIG 1C

AP1
(fixed, master)

$\beta$

$d_0$     $d_1$

$\alpha$     $\gamma$

AP2          $d_2$          MD
(fixed, slave)          (mobile, slave)

# FIG 2

FIG 3A

FIG 3B

## EUWB application environments

### Intellegent Home

### Transportation

### Automotive

### Heterogeneous Network

INTERWORKING:
Sending data between UWB1 and PCExt using
the UMTS access of the BRIDGE

Internal nework (WPAN with UWB) | External nework (UMTS connected to Internet)

## FIG 4 (STATE OF THE ART)

EP 2 244 098 B1

| | | | | Project management | WP1 |
|---|---|---|---|---|---|

| Cluster Home Environment | Cluster Automotive | Cluster Public Transport | Cluster Heterogeneous Network | Congnitive UWB Radio and Coexistence | WP2 |
|---|---|---|---|---|---|
| | | | | Multiple Antenna UWB Systems | WP3 |
| | | | | UWB Enabled Advanced Location Tracking | WP4 |
| | | | | UWB Multiband / Multimode Operation | WP5 |
| | | | | Open UWB Techology Platforms | WP7 |
| | | | | UWB in Heterogeneous Access Networks | WP6 |
| | | | | UWB in the Public Transport — WP8a | WP8 UWB8 Application Environment |
| | | | | UWB in the Automotive Environment — WP8b | |
| | | | | UWB in the Home Environment — WP8c | |
| | | | | Regulation and Standardisation — WP9 | |

# FIG 5
## (STATE OF THE ART)

27

FIG 6
(STATE OF THE ART)

FIG 7
(STATE OF THE ART)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1093318 A2
- US 7295808 B2
- US 7058414 B1
- US 20020118723 A1

**Non-patent literature cited in the description**

- **A. Durantini ; R. Giuliano ; F Mazzenga ; J. Hemandez ; M. B. Villarroya.** Detect and avoid procedure for UWB interference mitigation on narrowband systems. *Third International Symposium on Wireless Communication Systems (ISWCS '06),* 06 September 2006, 428-432, http://www.pulsers.eu
- **K. Kammerlander.** Factors influencing the design of economical cellular radio networks. *Siemens Telecom Report,* 1986, vol. 9, 9-16
- **M. Mouly ; M. B. Pautet.** *The GSM-system for mobile communications,* 1992